## Europäisches Patentamt
## European Patent Office
## Office européen des brevets

(19)

(11) Numéro de publication: **0 055 953**
**A1**

(12) **DEMANDE DE BREVET EUROPEEN**

(21) Numéro de dépôt: **81401962.6**

(22) Date de dépôt: **09.12.81**

(51) Int. Cl.³: **C 21 C 7/076**
**B 22 D 11/10**

(30) Priorité: **19.12.80 FR 8027013**

(43) Date de publication de la demande:
**14.07.82 Bulletin 82/28**

(84) Etats contractants désignés:
**DE FR GB SE**

(71) Demandeur: **DAUSSAN ET COMPAGNIE**
**29-33 Route de Rombas**
**F-57140 Woippy(FR)**

(72) Inventeur: **Daussan, Jean-Charles**
**42, rue Saint-Marcel**
**F-57000 Metz(FR)**

(72) Inventeur: **Daussan, Gérard**
**9, avenue Leclerc de Hautecloque**
**F-57000 Metz(FR)**

(72) Inventeur: **Daussan, André**
**52, rue des Pépinières**
**F-57050 Longeville-Les-Metz(FR)**

(74) Mandataire: **Bouju, André**
**38 Avenue de la Grande Armée**
**F-75017 Paris(FR)**

(54) **Composition pulvérulente et épurante pour récipient métallurgique.**

(57) La composition pulvérulente et épurante est destinée à être répandue sur la surface du métal liquide contenu dans un récipient métallurgique. Elle renferme de la cendre de balle de riz.

La composition renferme en outre de la magnésie et/ou de la chaux en une proportion telle que le rapport des concentrations pondérales de la magnésie et/ou de la chaux sur la silice contenue dans la composition soit compris entre 0,9 et 6.

Utilisation notamment pour éliminer les inclusions d'oxydes dans l'acier liquide introduit dans un répartiteur de coulée continue.

EP 0 055 953 A1

Croydon Printing Company Ltd

1

"Composition pulvérulente et épurante pour récipient métallurgique"

La présente invention est une composition pulvérulente et épurante, destinée à être répandue sur la surface du métal liquide contenu dans un récipient métallurgique et en particulier dans un répartiteur de coulée continue.

L'acier liquide qui est déversé dans un répartiteur de coulée continue renferme des oxydes dus à l'oxydation directe de l'acier par contact avec l'air libre ou à l'oxydation d'éléments métalliques ou métalloïdiques autres que le fer introduits volontairement ou non dans l'acier. Ces oxydes sont généralement constitués par $Fe_2O_3$, $FeO$, $SiO_2$ et $Al_2O_3$. Ces oxydes sont nuisibles car ils altèrent les caractéristiques mécaniques de l'acier obtenu.

Dans le cas de la coulée continue, l'acier liquide qui est introduit dans un répartiteur de coulée continue, est souvent "calmé" par ajout d'une quantité plus ou moins importante d'aluminium. Cet aluminium se transforme en alumine ($Al_2O_3$). Cet oxyde forme au sein du métal des inclusions localisées, très dures, particulièrement néfastes à l'égard des propriétés mécaniques de l'acier. Ainsi, lorsque de telles inclusions sont décelées, par exemple par rayons X, dans une pièce moulée en acier, cette dernière est immédiatement mise au rebut.

Pour éviter la formation de telles inclusions d'oxydes, on prend actuellement un certain nombre de précautions en vue d'éviter l'oxydation de l'acier liquide au contact de l'air libre. Ainsi, on protège le jet de métal provenant de la poche de coulée par un tube de coulée disposé entre la busette de la poche de coulée et le répartiteur de coulée continue situé sous cette dernière. Cette précaution n'est cependant pas suffisnate étant donné la facilité avec laquelle certains éléments se transforment en oxydes aux températures mises en jeu lors de la coulée.

Par ailleurs, il est également usuel de protéger la surface libre de l'acier liquide contenu dans le répartiteur de coulée en répandant sur cette surface une poudre de couverture ou en recouvrant cette surface par des plaques thermiquement isolantes et réfractaires.

En tant que poudre de couverture, on utilise soit de la cendre de balle de riz, soit de la suie de centrales thermiques additionnée d'oxydes alcalins ou de carbonates tels que du carbonate de sodium en tant que fondant pour diminuer le point de fusion de la silice contenue dans cette suie.

La cendre de balle de riz présente un important pouvoir d'isolation thermique, du fait de la structure particulière des particules de silice dont elle est constituée, mais elle ne permet nullement d'éviter la formation d'inclusions d'oxydes et notamment de silice ou d'alumine au sein du métal.

Les suies de centrales thermiques sont également inefficaces, et de plus ne présentent qu'un très faible pouvoir d'isolation thermique. En outre, ces suies engendrent lors de leur utilisation une poussière abondante et polluante.

Le but de la présente invention est de remédier aux inconvénients des poudres de couverture précitées en créant une composition qui présente à la fois un excellent pouvoir isolant thermique et qui permette simultanément de résoudre efficacement le problème des inclusions d'oxydes au sein du métal liquide qui est déversé dans un récipient métallurgique.

La composition, objet de la présente invention, destinée à être répandue sur la surface du métal liquide contenu dans un récipient métallurgique, renferme de la cendre de balle de riz.

Suivant l'invention, cette composition est caractérisée en ce qu'elle renferme en outre de la magnésie et/ou de la chaux en une proportion telle que le rapport des concentrations de la magnésie et/ou de la chaux sur la silice contenue dans la composition soit compris entre 0,9 et 6.

L'expérience a montré de façon surprenante que lorsqu'une telle composition était répandue sur la surface libre du métal liquide déversé dans un récipient métallurgique, il était possible de limiter considérablement la formation d'inclusions d'oxydes, au sein du métal obtenu.

Sans que l'invention soit liée à cette explication, il semblerait que la composition conforme à l'invention, du fait que sa teneur particulière en magnésie et/ou en chaux par rapport à la silice soit capable d'absorber les oxydes contenus dans le métal.

De préférence, la composition est la suivante:

Cendre de balle de riz:    30 à 40% en poids

Magnésie et/ou chaux:      70 à 60% en poids

le rapport des concentrations pondérales $\dfrac{MgO + CaO}{SiO_2}$

répondant à la condition précitée.

Une telle composition qui présente une proportion appréciable de cendre de balle de riz possède également un important pouvoir d'isolation thermique.

Les meilleurs résultats sont obtenus lorsque la composition répond sensiblement aux conditions suivantes:

Cendre de balle de riz:    35 à 40% en poids

Magnésie et/ou chaux:      60 à 65% en poids

le rapport des concentrations $\dfrac{MgO + CaO}{SiO_2}$ étant compris entre 2 et 2,5.

La magnésie et/ou la chaux peuvent être ajoutées à la composition sous forme de mangésie et/ou chaux pures ou sous forme de combinaison telle que le chrome-magnésie, la dolomie ou autre composé magnésien et/ou calcique, pourvu que la quantité de MgO et/ou CaO contenue dans la composition réponde aux conditions spécifiées plus haut.

D'autres particularités et avantages de l'invention apparaîtront encore dans la description ci-après.

La cendre de balle de riz déjà utilisée comme poudre de couverture pour l'acier liquide contenu dans un répartiteur de coulée continue et provenant d'une poche de coulée, renferme de fines particules hémisphériques de silice qui confèrent à cette cendre un excellent pouvoir d'isolation thermique. Ces particules de silice renferment une teneur en carbone résiduel qui varie entre 5 et 30% en poids environ. Ce carbone résiduel confère à la cendre d'excellentes propriétés réfractaires.

Le fait d'ajouter à cette cendre, une proportion de magnésie et/ou de chaux telle que le rapport des concentrations pondérales $\frac{MgO + CaO}{SiO_2}$ soit compris entre 2 et 2,5 n'affecte pratiquement pas le pouvoir isolant thermique de la composition.

Lorsqu'une telle composition est répandue sur l'acier liquide contenu dans un répartiteur de coulée continue, on constate que l'acier obtenu en fin de coulée présente une teneur en inclusions d'oxydes telles que $Al_2O_3$, $SiO_2$, $Fe_2O_3$, FeO, etc., nettement plus faible que dans le cas où on utilise la cendre de riz seule ou lorsque le rapport $\frac{MgO + CaO}{SiO_2}$ ne répond pas aux valeurs précitées.

Ce résultat peut s'expliquer par le fait que l'ajout de magnésie et/ou de chaux confère à la composition des propriétés basiques telles que des oxydes amphotères, comme l'alumine et les oxydes de fer, ou les oxydes acides tels que $SiO_2$ sont absorbés chimiquement par la composition, dès qu'ils viennent en contact avec cette dernière. Ce contact des oxydes avec la composition conforme à l'invention, répandue à la surface de l'acier liquide est favorisé par les courants de convexion intenses engendrés dans le répartiteur lors de la ˙coulée.

Les meilleurs résultats sont obtenus lorsque la composition épurante renferme:

39% en poids de cendre de balle de riz; et

61% en poids de magnésie et/ou de chaux, le rapport $\dfrac{MgO + CaO}{SiO_2}$ étant sensiblement égal à 2,1.

Le rapport précité des concentrations de $\dfrac{MgO + CaO}{SiO_2}$ est obtenu lorsque la cendre de balle de riz renferme une proportion de $SiO_2$ de l'ordre de 70 à 75% en poids.

Dans ce dernier cas, la cendre de riz est non seulement très isolante, mais également très réfractaire du fait de sa teneur appréciable en carbone résiduel.

D'excellents résultats sont néanmoins obtenus lorsque la composition renferme 30 à 40% en poids de cendre de balle de riz et 60 à 70% de magnésie et/ou de chaux, la cendre de balle de riz utilisée présentant une proportion de $SiO_2$ inférieure à 85% en poids.

Dans ce cas, la cendre renferme une forte proportion de carbone résiduel occlus et a de ce fait, un pouvoir réfractaire suffisant. En effet, si la cendre de balle de riz est trop pauvre en carbone résiduel, la composition risque d'être insuffisamment réfractaire et d'avoir en présence de la magnésie un point de fusion trop faible avec pour conséquence des risques de pollution du métal par de la silice et de la magnésie ou de la chaux.

Lorsque les conditions précitées sont réalisées non seulement la composition conforme à l'invention absorbe efficacement les oxydes dangereux inclus dans l'acier liquide, mais elle protège également ce dernier contre tout risque de réoxydation et assure en même temps une excellente isolation thermique de ce métal durant son séjour dans le répartiteur de coulée continue.

Par ailleurs, il est avantageux que la granulométrie de la cendre de balle de riz et de la magnésie et/ou la chaux soit telle que leur indice de finesse
selon la norme ASTM soit inférieur à 170, et de préférence
inférieur à 160. Dans ces conditions, les particules de la
composition présentent la finesse optimale. En effet, les
particules sont ainsi suffisamment fines pour former à la
surface du métal liquide une couche continue assurant une
protection thermique et particulièrement efficace contre
la réoxydation. De plus, lorsque la condition de finesse
précitée est remplie, les particules de silice de la
cendre de balle de riz et de magnésie peuvent fritter au
contact de l'acier liquide en formant ainsi sur la surface
de ce dernier, une couche continue et sensiblement hermétique à l'air. La protection thermique et contre la réoxydation est ainsi renforcée.

La magnésie et/ou la chaux peut être incorporée
à la composition à l'état de produit sensiblement pur
(à 97% environ), ou à l'état de combinaison de magnésie
et/ou de chaux telle que le chrome-magnésie, l'essentiel
étant que la teneur en magnésie et/ou de chaux de la composition satisfasse à la condition précitée.

Le chrome-magnésie présente l'avantage d'être
moins onéreux que la magnésie pure par exemple. De plus,
le fait d'apporter du chrome à la composition permet
d'assurer une certaine filtration des rayons infrarouges
issus du métal liquide, ce qui est un avantage.

Dans le cas notamment où la cendre de balle de
riz est relativement pauvre en carbone résiduel, (moins de
10% en poids environ), il est avantageux d'ajouter à la
composition jusqu'à 35% en poids d'une matière carbonée,
telle que de la sciure de bois, du graphite pulvérulent
ou autre matière solide à forte teneur en carbone. Cet
ajout de matière carbonée permet ainsi d'améliorer le
caractère réfractaire de la cendre de balle de riz pauvre
en carbone résiduel.

La composition conforme à l'invention qui renferme de la magnésie et/ou de la chaux est .compatible avec les matériaux usuels qui constituent les revêtements réfractaires permanents des répartiteurs de coulée continue. Pour éviter tout risque d'attaque chimique par la magnésie et/ou la chaux, il est préférable toutefois que ces revêtements soient eux-mêmes basiques, c'est-à-dire renferment de la magnésie ou dolomie. Il en est de même pour les tubes de coulée destinés à plonger dans l'acier liquide contenu dans le répartiteur de coulée continue.

Bien entendu, l'invention n'est pas limitée aux exemples que l'on vient de décrire et on peut apporter à ceux-ci de nombreuses modifications, sans sortir du cadre de l'invention.

Ainsi, la composition conforme à l'invention peut être utilisée pour d'autres récipients métallurgiques que les répartiteurs de coulée continue. De plus, l'invention n'est pas limitée non plus au cas de l'acier liquide et peut s'appliquer à tous les métaux ou alliages liquides, susceptibles de s'oxyder à l'air ou de renfermer des oxydes nuisibles tels que l'alumine et la silice.

On peut encore introduire du MgO et/ou du CaO dans la composition au moyen des composés suivants, donnés à titre d'exemples non limitatifs:

1) Olivine ($Mg\ Fe_2\ SiO_4$): ce composé est basi- que c'est-à-dire que sa teneur en MgO est supérieure à sa teneur en $SiO_2$ acide.

2) Magnésite ou giobertite ou carbonate de magnésie ($MgCO_3$): ce composé se décompose à la chaleur en MgO.

3) Pyroxène: dioxyde de Ca, Mg, Si: ce composé permet d'introduire dans la composition un mélange de MgO et de CaO.

4) Aragonite ou calcite: $CaCO_3$: ce composé se décompose à la chaleur en CaO.

5) Dolomie: $CaMg(CO_3)_2$.

D'autres composés peuvent encore être utilisés, pourvu que ceux-ci soient basiques c'est-à-dire que la teneur en MgO et/ou CaO soit prépondérante par rapport aux autres éléments de la combinaison chimique.

REVENDICATIONS

1. Composition pulvérulente et épurante, destinée à être répandue sur la surface du métal liquide contenu dans un récipient métallurgique, cette composition renfermant de la cendre de balle de riz, caractérisée en ce qu'elle renferme en outre de la magnésie et/ou de la chaux en une proportion telle que le rapport des concentrations pondérales de la magnésie et/ou de la chaux sur la silice contenue dans composition soit compris entre 0,9 et 6.

2. Composition conforme à la revendication 1, caractérisée en ce qu'elle renferme: 30 à 40% en poids de cendre de balle de riz et 60 à 70% en poids de magnésie et/ou de chaux.

3. Composition conforme à l'une quelconque des revendications 1 ou 2, caractérisée en ce qu'elle renferme 35 à 40% en poids de cendre de balle de riz et 60 à 65% en poids de magnésie et/ou de chaux, le rapport des concentrations pondérales $\frac{MgO + CaO}{SiO_2}$ étant compris entre 2 et 2,5.

4. Composition conforme à l'une quelconque des revendications 1 à 3, caractérisée en ce que la magnésie et/ou la chaux sont ajoutées à la composition sous forme de produits purs.

5. Composition conforme à la revendication 1, caractérisée en ce que la magnésie et/ou la chaux sont ajoutées à la composition en partie ou en totalité sous forme de composés renfermant de la magnésie et/ou de la chaux en tant que produits principaux en combinaison chimique avec d'autres éléments.

6. Composition conforme à l'une quelconque des revendications 1 à 3, caractérisée en ce que la magnésie est ajoutée à la composition en partie ou en totalité sous forme de chrome-magnésie.

7. Composition conforme à l'une quelconque des revendications 1 à 6, caractérisée en ce que la cendre de balle de riz a une teneur en silice inférieure à 85% en poids.

8. Composition conforme à la revendication 7, caractérisée en ce que la cendre de balle de riz a une teneur en silice comprise entre 70 et 75% en poids.

9. Composition conforme à la revendication 1, caractérisée en ce que la composition renferme en outre jusqu'à 35% en poids d'une matière carbonée.

**0055953**

Numéro de la demande

**EP 81 40 1962**

Office européen
des brevets

**RAPPORT DE RECHERCHE EUROPEENNE**

| | DOCUMENTS CONSIDERES COMME PERTINENTS | | |
|---|---|---|---|
| Catégorie | Citation du document avec indication, en cas de besoin, des parties pertinentes | Revendication concernée | |
| X | <u>FR - A - 2 348 261</u> (ABDELLATIF)<br><br>* revendications 3-5; page 1, lignes 28-30; page 4, lignes 23-25 * | 1-4, 8-10 | |
| | --- | | |
| A | <u>FR - A - 1 590 586</u> (DAUSSAN) | | |
| A | <u>AT - B - 321 481</u> (TIDO CHEMISCH-TECHNISCHE PRODUKTE) | | |
| A | <u>FR - A - 1 554 715</u> (MINISTERUL INDUSTRIEI METALLURGICE)<br><br>--------- | | |

**CLASSEMENT DE LA DEMANDE (Int. Cl. 3)**

C 21 C   7/076
B 22 D  11/10

**DOMAINES TECHNIQUES RECHERCHES (Int. Cl. 3)**

C 21 C
B 22 D

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-ecrite
P: document intercalaire
T: théorie ou principe à la base de l'invention
E· document de brevet antérieur, mais publié à la date de dépôt ou après cette date
D  cite dans la demande
L  cite pour d'autres raisons

& membre de la même famille, document correspondant

Le present rapport de recherche a été établi pour toutes les revendications

| Lieu de la recherche | Date d achevement de la recherche | Examinateur |
|---|---|---|
| La Haye | 25-03-1982 | SCHROEDER |

OEB Form 1503.1   06.78